# EUROPEAN PATENT SPECIFICATION

(11) **EP 1 075 915 B1**
(45) Date of publication and mention of the grant of the patent: **29.12.2004**
(21) Application number: 00500145.8
(22) Date of filing: 30.06.2000
(51) Int. Cl.: B27M 1/08, B27C 9/04, B27G 5/02, B27B 25/02, B27B 29/00, B23Q 3/18, B23Q 1/03, B23Q 7/05, B23D 45/14

(54) **Improved mitering machine**
Gehrungseinrichtung
Machine a couper en onglet

(30) Priority: 10.08.1999 ES 9901842
(43) Date of publication of application: 14.02.2001
(73) Proprietor: Puertes Albiach, Juan Carlos, 46910 Benetuser (Valencia) (ES); Puertes Albiach, Javier, 46910 Benetuser (Valencia) (ES)
(72) Inventor: Puertes Albiach, Juan Carlos, 46910 Benetuser (Valencia) (ES); Puertes Albiach, Javier, 46910 Benetuser (Valencia) (ES)
(74) Representative: Ungria Lopez, Javier

(56) References cited:
- EP-A- 0 836 910
- FR-A- 2 578 777
- PATENT ABSTRACTS OF JAPAN vol. 1995, no. 03, 28 April 1995 (1995-04-28) -& JP 06 344304 A (SANSOU:KK), 20 December 1994 (1994-12-20)

## Description

The present invention refers to a mitering machine, as per the preamble of claim 1. An example of such a machine is disclosed by EP 836 910-A.

Hence, the mitering machine is equipped to simultaneously carry out milling or drilling operations and cutting operations with different angles (miter cutting).

Furthermore, the mitering machine is also prepared to automatically locate the wood pieces in the right place in order to work them afterwards, previously fastening the same by means of some fastening means.

On the other hand, another possibility of the new machine of the invention is that it can carry out the different cutting operations (drilling, milling, sawing, etc.) on two profiles simultaneously.

### BACKGROUND OF THE INVENTION

Nowadays there are machines for working wood boards and in general, different wood profiles one by one.

Milling operations, drilling operations, as well as miter cutting with a saw are carried out on said profiles, in such a way that these operations should be carried out sequentially without the operations interfering with each other.

These known machines are in general numerical control machines and have the inconvenience that they are relatively slow due to the fact that they cannot carry out several operations simultaneously.

Furthermore, another inconvenience is that these machines are not prepared to simultaneously carry out work on more than two profiles either.

### DESCRIPTION OF THE INVENTION

In broad outline and in order to overcome the problems and inconveniences mentioned in the preceding section, the invention proposes a new improved machine that is capable of carrying out several cutting operations simultaneously on at least one wood profile.

This new machine essentially of numerical control is equipped to work on two or more profiles at the same time, whereby the efficiency and production will be substantially greater than those obtained with other conventional machines.

It is defined by a base structure constituting the frame that has some lateral guides where a main carriage is conveyed longitudinally, and some central guides where several intermediate fastening implements and other end implements that include two tiltable heads provided with some circular saws are conveyed.

The intermediate fastening implements are equipped to fasten the pieces or profiles during the different cutting operations thereof.

A support where a head supporting a cutting tool, such as a milling cutter or drill, also moves vertically, is moved and guided transversally on the main carriage in order to carry out different operations on the wood profile or profiles.

On the other hand, the end fastening implements comprise a smaller carriage movable longitudinally along the central guides, the corresponding tiltable head supporting the saw, which moves and guides on other transversal guides of the respective smaller carriage being connected to the smaller carriage.

The main carriage has some adequate means for connecting with each one of the intermediate fastening implements and also with the end implements that include the cutting disk or saw. Thanks to said connecting means and by means of the movement of the carriage, the different implements will be placed one by one in the corresponding place along the central guides. Afterwards these positions of the different implements are blocked, in order not to subsequently hamper the different operations to be carried out on the wood profiles.

Hence, the control of the machine will keep the position of the implements in the memory, in such a way that the cutting tools do not interfere with the implements.

The mitering machine is capable of including an automatic system for feeding and removing the profiles or pieces to be worked. For this purpose, some tiltable supports provided with some groups of rotating rollers on which the profiles sit during their feeding and removal along the machine have been provided for. The tiltable supports with the rollers are coupled to the fastening implements and also to the end implements. Furthermore, the movement of the rollers is carried out by means of a belt that receives the action of a longitudinal arbor along the entire machine and under the central guides where the intermediate fastening implements are coupled.

In order to provide a better understanding of the characteristics of the invention and forming an integral part of this specification, some sheets of drawings in whose figures the following has been represented in an illustrative and non-restrictive manner are attached hereto.

### BRIEF DESCRIPTION OF THE DRAWINGS

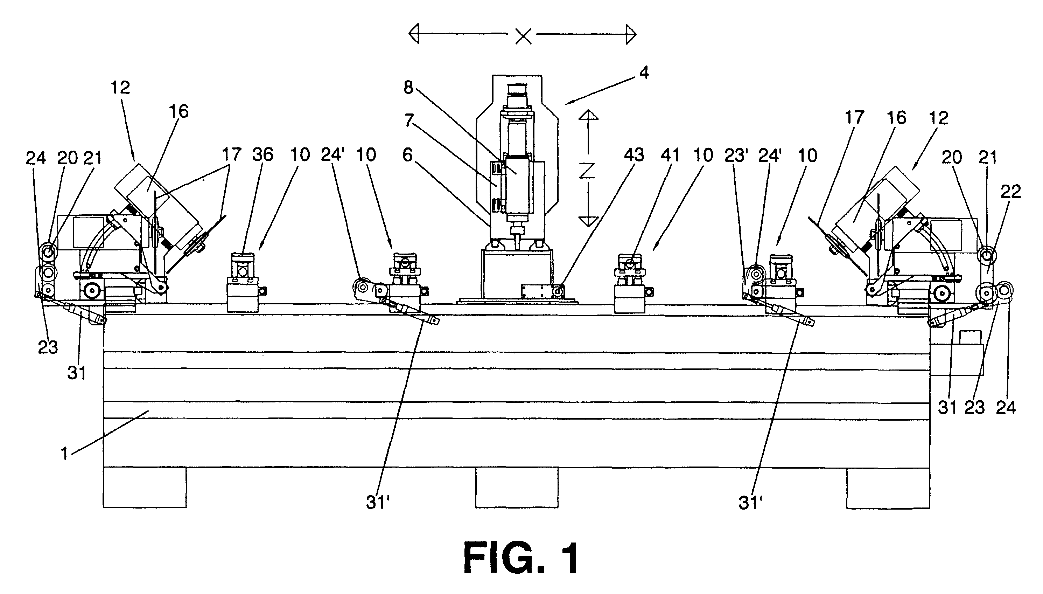

Figure 1 is a front raised view of the improved mitering machine, object of the invention.

The machine basically comprises a frame with some lateral guides and some central guides, all of them arranged longitudinally.

The main carriage provided with a cutting tool head is coupled to the lateral guides, while the intermediate fastening implements and other end implements provided with a cutting saw or disk are coupled to the central guides.

The purpose of the intermediate implements is to allow the fastening of the pieces or profiles where the different cutting operations (holes, milling, miter cutting, etc.) will be carried out.

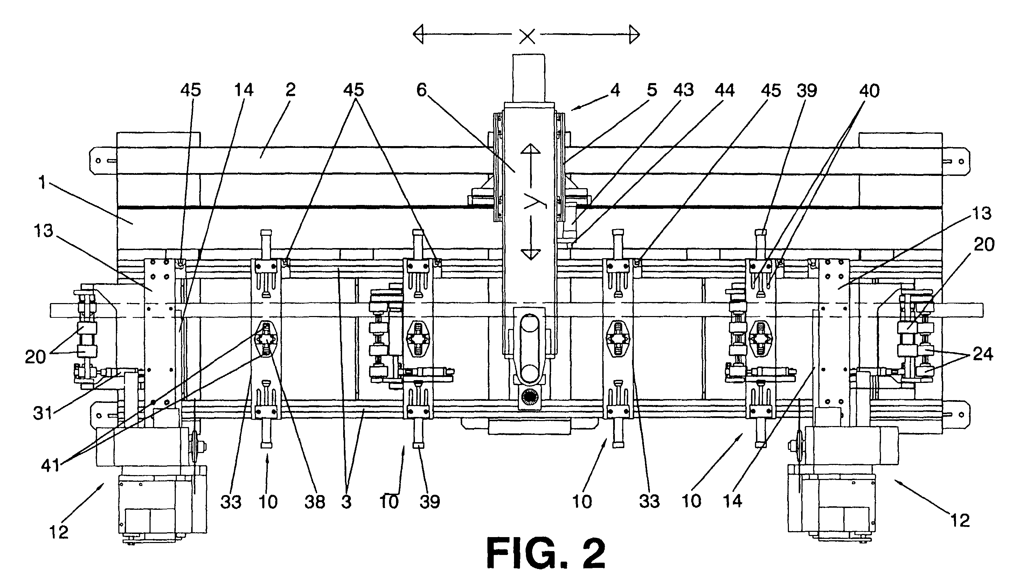

Figure 2 is a plan view of that which is shown in figure 1.

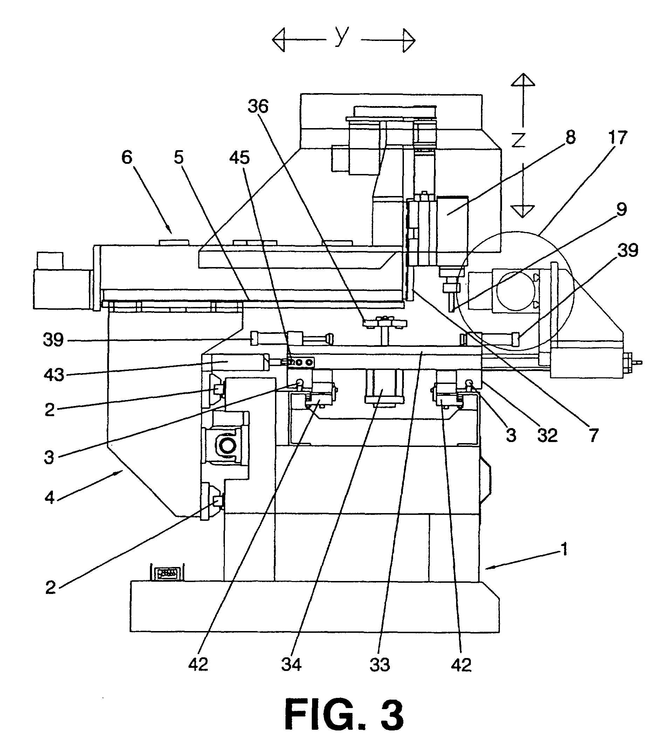

Figure 3 is a profile view of the machine of the invention.

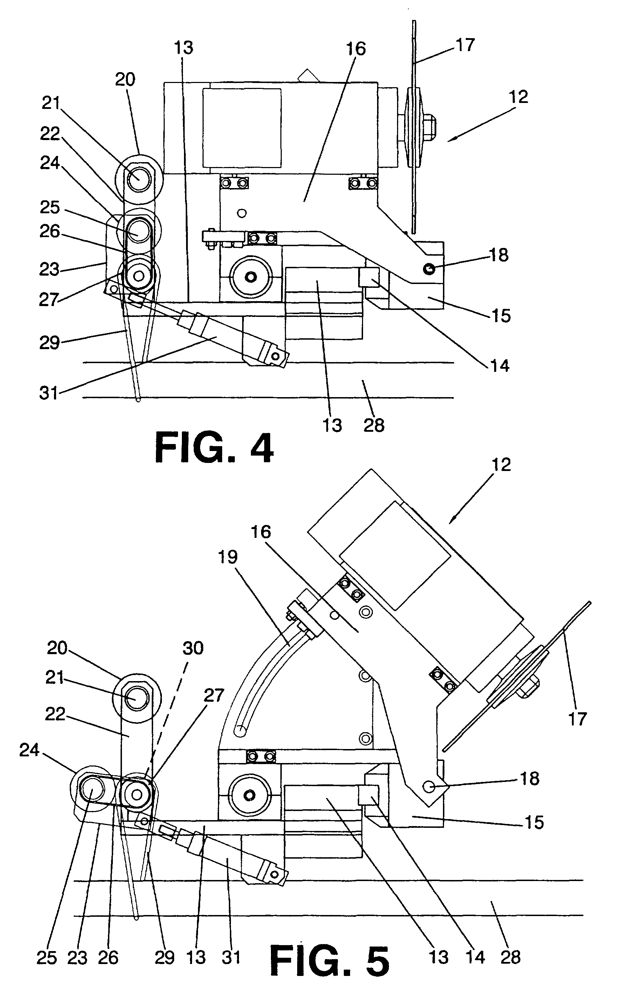

Figure 4 is a raised view of one of the end implements that includes the cutting disk or saw.

Figure 5 is a view similar to the preceding one, where the cutting disk is located in an inclined position in order to carry out a miter cutting.

Figure 6 is a front raised view of one of the intermediate fastening implements with the feeding roller extended.

Figure 7 is a profile view of that which has been represented in figure 6.

Figure 8 is a front raised view of an intermediate fastening implement with a feeding roller.

Figure 9 is a profile view of that which has been shown in figure 8.

### DESCRIPTION OF THE PREFERRED EMBODIMENT

Making reference to the numbering used in the figures, we can see how the improved mitering machine, which the invention proposes, is a numerical control machine and it is defined by a metal structure constituting a frame (1) that includes some lateral guides (2) and other central guides (3), all arranged longitudinally and along the entire machine.

A main carriage (4) that in turn has other transversal guides (5) where a support (6) provided with other vertical guides (7) where a head (8) supporting the cutting tools (9), such as a drill, milling cutter, etc. is coupled, is guided along the lateral guides (2). In this way, the cutting tool (9) will be able to make a cut in the three axes.

On the other hand, some intermediate implements (10) for fastening the pieces to be worked (11) and some end implements (12) are coupled and guided in the central guides (3).

The end implements (12) comprise a smaller carriage (13) movable longitudinally along the central guides (3), the carriage having some transversal guides (14) where an intermediate support (15) wherein a tiltable head (16) supporting a circular cutting disk or saw (17) is coupled, is guided. This tiltable head (16) is coupled to a front articulation shaft (18) of the intermediate support (15), at the same time that the angular movement is guided in an arched groove (19) of each one of the intermediate supports (15).

These end implements (12) include some top pressing rollers (20) coupled to a transversal shaft (21) connected by its ends to some lateral profiles (22) integral to the rear part of the respective smaller carriage (13). There is also a tiltable support (23) supporting a group top group of rollers (24) fastened to a striated shaft (25) that receives its rotating movement by means of a toothed belt (26) connected to a bottom shaft (27) coupled to this rear part of this smaller carriage (13). This shaft (25), just like the striated shaft (25), is coupled to the tiltable support (23), which tilts around said bottom shaft (27) also connected to the smaller carriage (13) that forms part of each one of the end implements (12).

The bottom shaft (27) receives the rotating movement from a longitudinal arbor (28) by means of a circular belt (29) coupled to a semicircular throat (30) of the cited bottom shaft (27).

On the other hand, the position of the tiltable support (23) and therefore of the group of top rollers (24) is established by a pneumatic cylinder (31) connected jointedly to the smaller carriage (13), at the same time that its rod is also connected jointedly to the tiltable support itself (23).

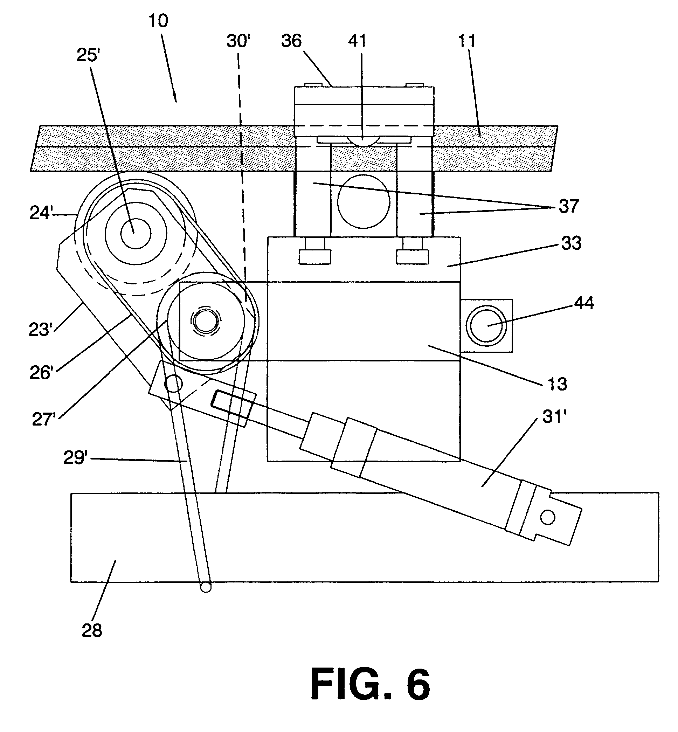

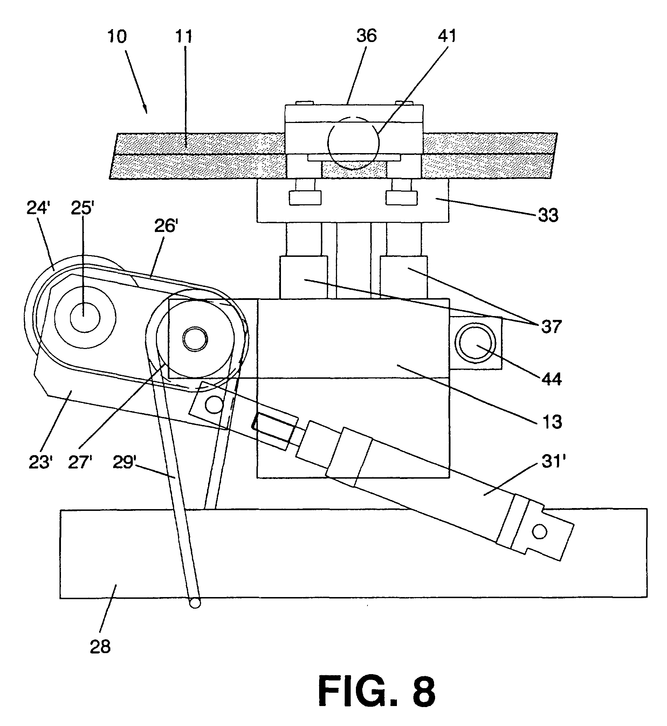

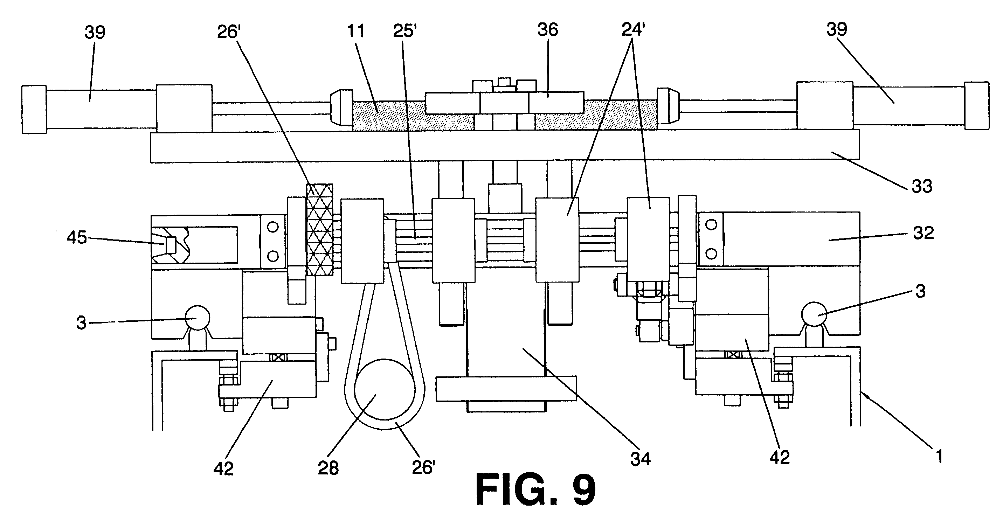

The intermediate fastening implements (10), just as it is shown in figures 6, 7, 8 and 9, comprise, in principle, a smaller carriage (32) movable longitudinally along the central guides (3), at the same time that the smaller carriage includes a top platform (33) movable vertically by means of a pneumatic cylinder (34) and guided along two vertical guides (35).

There is an abutment piece (36) for fastening the wood profiles (11) above this top platform (33), this piece being connected to some central supports (37) integral to the smaller carriage (32) of the corresponding intermediate implement (10). The top platform (33) has an opening (38) for the purpose of facilitating the passing of the central supports (37). Hence, the wood profiles (11) will be in principle held tight against the abutment pieces (36) pushed by the top platforms (33).

The wood profiles (11) will also be fastened by means of some transversal pneumatic cylinders (39) fastened in some parallel grooves (40) established in the cited top platforms (33). Furthermore, it should be pointed out that these transversal cylinders (39) will place the wood profiles (11) in the correct position if they were not in such a position.

The abutment piece (36) includes on its underneath surface some concealable counterpressure rollers (41) whose purpose is manifested during the feeding and removal of the wood pieces or profiles (11) to be worked.

Just like the end implements (12), each one of the intermediate implements (10) includes a tiltable support (23') supporting a group of rollers (24') fastened to a striated shaft (25') that receives a rotating movement by means of a toothed belt (26') connected to the bottom shaft (27') coupled, just like the striated shaft (25'), to the cited tiltable support (23'), which tilts around said bottom shaft (27') also connected to the smaller carriage (32) of the respective intermediate implement (10).

The bottom shaft (27') receives the rotating movement from the longitudinal arbor (28) by means of a circular belt (29') coupled to a semicircular throat (30') of the cited bottom shaft (27').

The position of the tiltable support (23') and of the group of rollers (24') is also established by means of a pneumatic cylinder (31') connected jointedly to the corresponding smaller carriage (32), at the same time that its rod is connected jointedly to the tiltable support itself (23').

On the other hand, the smaller carriages (13) and (32) of the end (12) and intermediate (10) utensils include some blocking shoes (42) for the purpose of immobilizing them in the desired positions along the entire central guides (3).

The main carriage (4) includes a small pneumatic cylinder (43), whose rod finishes in a conic section (44) complementary to some recesses (45) in the same way that they are located in one part of the smaller carriages (30) and (32) of the end (12) and intermediate (10) implements, respectively. In this way, the main carriage (4) assembly will place the intermediate (10) and end (12) implements in a suitable position of the central guides (3) so that the different cutting operations do not interfere with the tools (milling cutter, drill, saw, etc.), said relative positions of the implements (10) and (12) being recorded in the control system of the machine.

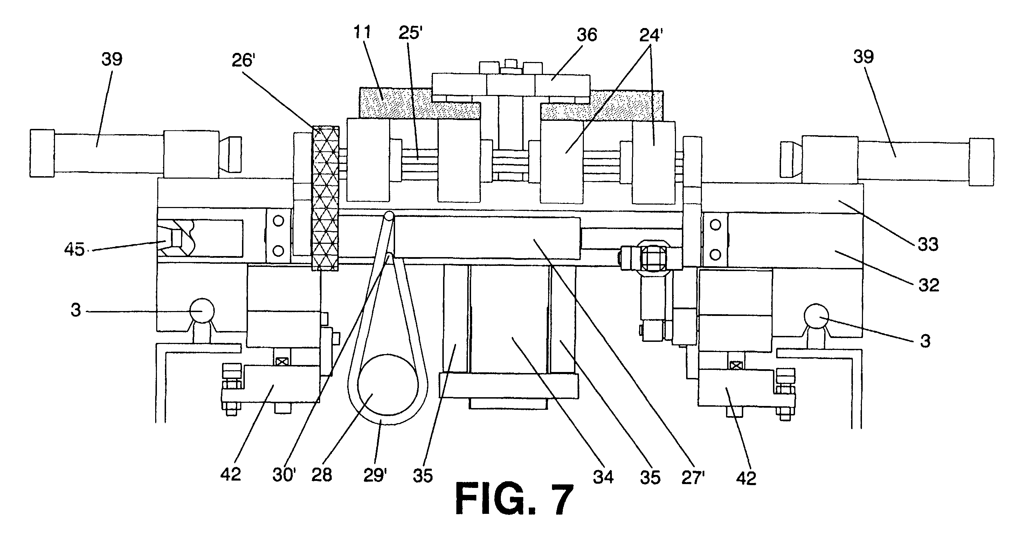

With this described arrangement, when the work with the machine of the invention begins, first of all the wood profiles (11) like the ones represented in the figures will be fed. These profiles (11) will be automatically conveyed by means of the different counterpressure rollers and the groups of rollers of the tiltable supports (23) and (23') that form part of the implements coupled to the central guides (3). During the feeding and also during the removal of the wood profiles (11) the tiltable supports (23) and (23') of the rollers of the implements (10) and (12) will be located in a raised position, in such a way that the wood profiles (11) will be inserted between the counterpressure rollers (20) and (24) and the rollers (24') and (41) of the end (12) and intermediate (10) implements, respectively. Furthermore, during the removal and feeding of the wood profiles, the platforms (33) of the intermediate implements (10) will remain located in a bottom position, at the same time that the lateral fastening cylinders (39) fastened to said platforms (33) will be in a drawn back position (figure 7).

Once the wood profiles (11) have reached their longitudinal position, the tiltable supports (23), (23') are placed in a bottom position, whereby said profiles (11) will stop contacting the different groups of rollers in order to then rest on the platforms (33) of the intermediate implements (10). In this situation, the stable position of the wood profiles (11) is ensured and the possible differences in the thickness of the cited profiles are absorbed as the top surface of these profiles to be mechanized is pressed against the abutment piece (36) due to the effect of the upward thrust that the pneumatic cylinder (34) exerts on the top platform (33). Furthermore, the transversal cylinders (39) fastened to the platforms that rise together with the platforms will press the wood profiles (11) at their sides in order to definitively place them in a correct position making the groove of the cited wood profiles (11) abut against the abutment piece (36), achieving at the same time the straightening of the cited wood profiles (11). In this fastening position, the platforms take a raised position.

When the wood profiles (11) are correctly fastened, the different cutting operations, such as milling and drilling by means of the head (8) of the main carriage (4) and miter cutting or any other cutting by means of the circular disks (17) of the end implements (12), will be proceeded with, these operations being carried out simultaneously.

## Claims

1. Mitering machine, being a numerical control machine that comprises a structure constituting a frame, as well as some cutting tools in order to carry out drilling, milling and cutting operations, also comprising some lateral guides along the entire frame where a main carriage provided with transversal guides where a support provided with some vertical guides is coupled, is guided, where in turn a head supporting at least one tool is guided; **characterized in that** it includes:
- some central guides (3) along the entire frame (1) where some intermediate implements (10) for fastening at least one elongated wood profile (11) or the like are guided;
- some end implements (12) coupled to the central guides (3) and which include a cutting disk (17) in order to make vertical or inclined cuts in the wood profiles (11) or the like;
- some means for positioning the intermediate (10) and end (12) implements by means of the main carriage (4);
- some means for blocking the implements (10 and 12) coupled thereto.

2. Mitering machine, according to the preceding claim, **characterized in that** it includes some means for automatic feeding and removal of the wood pieces or profiles (11) to be worked, said means being connected to the intermediate (10) and end (12) implements.

3. Mitering machine, according to claim 1, **characterized in that** each one of the end implements (12) comprises:
- a smaller carriage (13) coupled to the central guides (3);
- an intermediate support (15) movable in some transversal guides (14) established in the smaller carriage (13);
- a tiltable head (16) supporting the cutting disk (17) and which is coupled to a front articulation shaft (18) of the intermediate support (15), the intermediate support having an arched groove (19) for guiding the tiltable head (16),

4. Mitering machine, according to claim 1, **characterized in that** each one of the intermediate implements (10) comprises:
- a smaller carriage (32) coupled to the central guides (3);
- a top platform (33) movable vertically and established above the smaller carriage (32), the platform being connected to the rod of a pneumatic cylinder (34) fastened to the corresponding smaller carriage (32) of the intermediate implement (10);
- an abutment piece (36) for fastening the wood profiles (11) against which the top platform (33) pushes and said abutment piece (36) being connected to two central supports (37) integral to the smaller carriage (32) of the intermediate implement (10), the top platforms (33) having some central openings (38) for the passing of these central supports (37);
- some lateral tightening mechanisms arranged transversally with respect to the position of the wood profiles (11) and whose purpose is to straighten the cited profiles and to align the groove of the profiles positioning them in their position against the abutment pieces (36), said tightening mechanisms being fastened to the top platforms (33) and rising and dropping integrally to the platforms.

5. Mitering machine, according to claim 1, **characterized in that** the means for positioning the implements (10 and 12) coupled to the central guides (3) are defined by a small pneumatic cylinder (43) fastened to the main carriage (4), and which has a rod, whose end conic section (44) is capable of being introduced in a complementary hole (45) established in each one of the smaller carriages (13 and 32) of the different implements (10 and 12); all of this in order to move the implements to some predetermined positions along the central guides (3) by means of the movement of the main carriage (4).

6. Mitering machine, according to claim 1, **characterized in that** the means for blocking the implements (10 and 12) consist of some blocking shoes (42).

7. Mitering machine, according to claims 1 and 2, **characterized in that** the means for feeding and removing the wood profiles (11) comprise:
- some tiltable supports (23, 23') coupled to the respective smaller carriages (13, 32) of the implements (12, 10) by means of some bottom shafts (27, 27');
- some groups of rotating rollers (24, 24') coupled to some top striated shafts (25, 25') connected to the tiltable supports (23, 23');
- some toothed transmission belts (26, 26') that connect the top striated shafts (25, 25') and the bottom shafts (27, 27');
- some pneumatic cylinders (31, 31') for positioning the tiltable supports (23, 23'), said cylinders connecting jointedly to the smaller carriages (13, 32), while the rods connect, also jointedly, to the tiltable supports themselves (23, 23');
- some circular belts (29, 29') that connect the bottom shafts (27, 27') with a longitudinal arbor (28) established under the central guides (3), the bottom shafts (27, 27') having some semicircular throats (30, 30') for coupling the circular belts (29, 29').

8. Mitering machine, according to claims 1, 2 and 7, **characterized in that** the means for feeding and removing the wood profiles (11) furthermore comprise:
- some counterpressure rollers (41, 20) established above the groups of rotating rollers (24, 24') connected to the tiltable supports (23, 23'), all so that said wood profiles (11) are moved and guided between the groups of rotating rollers (24, 24') and the other counterpressure rollers (20, 41).

9. Mitering machine, according to claim 8, **characterized in that** the counterpressure rollers (20) of the end implements (12) are coupled to a transversal shaft (21) coupled to some lateral profiles (22) integral to the respective smaller carriage (13) that forms part of the respective end implement (12).

10. Mitering machine, according to claims 4 and 8, **characterized in that** the counterpressure rollers (41) are arranged on the bottom surface of the abutment pieces (36) of the intermediate implements (10), said counterpressure rollers (41) being concealable.

11. Mitering machine, according to claim 4, **characterized in that** the lateral tightening mechanisms consist essentially of some pneumatic cylinders (39) fastened to the top platforms (33).

## Patentansprüche

1. Gehrungsmaschine, die eine numerisch gesteuerte Maschine ist, die eine Struktur, die einen Rahmen bildet, sowie Schneidwerkzeuge zum Durchführen von Bohr-, Fräs- und Schneidvorgängen umfasst, und außerdem seitliche Führungen entlang des gesamten Rahmens umfasst, wo ein mit Querführungen ausgestatteter Hauptschlitten, wo ein mit vertikalen Führungen ausgestatteter Träger gekoppelt ist, geführt wird, wo wiederum ein Kopf zum Tragen von wenigstens einem Werkzeug geführt wird; **dadurch gekennzeichnet, dass** sie Folgendes umfasst:
- Mittelführungen (3) entlang des gesamten Rahmens (1), wo Zwischenvorrichtungen (10) zum sicheren Befestigen von wenigstens einem längeren Holzprofil (11) oder Ähnlichem geführt werden;
- Endvorrichtungen (12), die an die Mittelführungen (3) gekoppelt sind und die eine Trennscheibe (17) umfassen, um vertikale oder schräge Schnitte in den Holzprofilen (11) oder Ähnlichem auszuführen;
- Einrichtungen zum Positionieren der Zwischen- (10) und Endvorrichtungen (12) mit Hilfe des Hauptschlittens (4);
- Einrichtungen zum Sperren der daran gekoppelten Vorrichtungen (10 und 12).

2. Gehrungsmaschine nach dem vorhergehenden Anspruch, **dadurch gekennzeichnet, dass** sie Einrichtungen für automatisches Zuführen und Entfernen der zu bearbeitenden Holzstücke oder Profile (11) umfasst, wobei die Einrichtungen mit den Zwischen- (10) und Endvorrichtungen (12) verbunden sind.

3. Gehrungsmaschine nach Anspruch 1, **dadurch gekennzeichnet, dass** jede der Endvorrichtungen (12) Folgendes umfasst:
- einen kleineren Schlitten (13), der an die Mittelführungen (3) gekoppelt ist;
- einen Zwischenträger (15), der in Querführungen (14), die bei dem kleineren Schlitten (13) eingerichtet sind, bewegt werden kann;
- einen kippbaren Kopf (16), der die Trennscheibe (17) trägt und der an eine vordere Gelenkwelle (18) des Zwischenträgers (15) gekoppelt ist, wobei der Zwischenträger eine gekrümmte Nut (19) zum Führen des kippbaren Kopfes (16) aufweist.

4. Gehrungsmaschine nach Anspruch 1, **dadurch gekennzeichnet, dass** jede der Zwischenvorrichtungen (10) Folgendes umfasst:
- einen kleineren Schlitten (32), der an die Mittelführungen (3) gekoppelt ist;
- eine obere Plattform (33), die vertikal beweglich ist und über dem kleineren Schlitten (32) eingerichtet ist, wobei die Plattform mit der Stange eines pneumatischen Zylinders (34) verbunden ist, der sicher an dem entsprechenden kleineren Schlitten (32) der Zwischenvorrichtung (10) befestigt ist;
- ein Widerlagerstück (36) zum sicheren Befestigen der Holzprofile (11), gegen das die obere Plattform (33) drückt, wobei das Widerlagerstück (36) mit zwei Mittelträgern (37) verbunden ist, die in den kleineren Schlitten (32) der Zwischenvorrichtung (10) integriert sind, wobei die oberen Plattformen (33) Mittelöffnungen (38) für den Durchgang dieser Mittelträger (37) besitzen;
- seitliche Spannmechanismen, die im Bezug auf die Position der Holzprofile (11) quer angeordnet sind und deren Zweck darin besteht, die genannten Profile zu richten und die Nut der Profile auszurichten, indem sie in ihrer Position gegen die Widerlagerstücke (36) positioniert werden, wobei die Spannmechanismen sicher an den oberen Plattformen (33) befestigt sind und integral zu den Plattformen steigen und fallen.

5. Gehrungsmaschine nach Anspruch 1, **dadurch gekennzeichnet, dass** die Einrichtungen zum Positionieren der Vorrichtungen (10 und 12), die mit den Mittelführungen (3) gekoppelt sind, durch einen kleinen pneumatischen Zylinder (43) definiert werden, der sicher an dem Hauptschlitten (4) befestigt ist und der eine Stange besitzt, deren kegelförmiger Endabschnitt (44) in ein ergänzendes Loch (45) eingeführt werden kann, das in jedem der kleineren Schlitten (13 und 32) der verschiedenen Vorrichtungen (10 und 12) eingerichtet ist; wobei all dies dazu dient, die Vorrichtungen mit Hilfe der Bewegung des Hauptschlittens (4) zu vorgegebenen Positionen entlang der Mittelführungen (3) zu bewegen.

6. Gehrungsmaschine nach Anspruch 1, **dadurch gekennzeichnet, dass** die Einrichtungen zum Sperren der Vorrichtungen (10 und 12) aus Sperrschuhen (42) bestehen.

7. Gehrungsmaschine nach Anspruch 1 und 2, **dadurch gekennzeichnet, dass** die Einrichtungen zum Zuführen und Entfernen der Holzprofile (11) Folgendes umfassen:
- kippbare Träger (23, 23'), die mit Hilfe von unteren Wellen (27, 27') an die entsprechenden kleineren Schlitten (13, 32) der Vorrichtungen (12, 10) gekoppelt sind;
- Gruppen von drehenden Walzen (24, 24'), die an obere geriefte Wellen (25, 25') gekoppelt sind, die mit den kippbaren Trägern (23, 23') verbunden sind;
- Transmissionszahnriemen (26, 26'), die die oberen gerieften Wellen (25, 25') und die unteren Wellen (27, 27') verbinden;
- pneumatische Zylinder (31, 31') zum Positionieren der kippbaren Träger (23, 23'), wobei sich die Zylinder gemeinsam mit den kleineren Schlitten (13, 32) verbinden, während sich die Stangen, ebenfalls gemeinsam, mit den kippbaren Trägern selbst (23, 23') verbinden;
- Rundriemen (29, 29'), die die unteren Wellen (27, 27') mit einer unter den Mittelführungen (3) eingerichteten Längsachse (28) verbinden, wobei die unteren Wellen (27, 27') halbrunde Kehlen (30, 30') zum Koppeln der Rundriemen (29, 29') besitzen.

8. Gehrungsmaschine nach Anspruch 1, 2 und 7, **dadurch gekennzeichnet, dass** die Einrichtungen zum Zuführen und Entfernen der Holzprofile (11) des Weiteren Folgendes umfassen:
- Gegendruckwalzen (41, 20), die über den Gruppen von drehenden Walzen (24, 24'), die mit den kippbaren Trägern (23, 23') verbunden sind, eingerichtet sind, und zwar sämtlich so, dass die Holzprofile (11) zwischen den Gruppen von drehenden Walzen (24, 24') und den anderen Gegendruckwalzen (20, 41) bewegt und geführt werden.

9. Gehrungsmaschine nach Anspruch 8, **dadurch gekennzeichnet, dass** die Gegendruckwalzen (20) der Endvorrichtungen (12) an eine Querwelle (21) gekoppelt sind, die an seitliche Profile (22) gekoppelt ist, die in die entsprechenden kleineren Schlitten (13) integriert sind, der einen Teil der entsprechenden Endvorrichtung (12) bildet.

10. Gehrungsmaschine nach Anspruch 4 und 8, **dadurch gekennzeichnet, dass** die Gegendruckwalzen (41) an der unteren Fläche der Widerlagerstücke (36) der Zwischenvorrichtungen (10) angeordnet sind, wobei die Gegendruckwalzen (41) verdeckbar sind.

11. Gehrungsmaschine nach Anspruch 4, **dadurch gekennzeichnet, dass** die seitlichen Spannmechanismen im Wesentlichen aus pneumatischen Zylindern (39) bestehen, die sicher an den oberen Plattformen (33) befestigt sind.

## Revendications

1. Machine d'assemblage en onglet, sous forme d'une machine à commande numérique qui comprend une structure constituée d'un châssis, ainsi que de quelques outils de coupe afin d'effectuer les opérations de perçage, de fraisage et de coupe, et comprenant également des guides latéraux le long de la totalité du châssis, sur lesquels est guidé un chariot principal pourvu de guides transversaux, auxquels est accouplé un support pourvu de guides verticaux, sur lesquels est guidée à son tour une tête qui supporte au moins un outil ; **caractérisée en ce qu'**elle inclut :
- des guides centraux (3) le long de la totalité du châssis (1), sur lesquels sont guidés des accessoires intermédiaires (10) pour fixer au moins un profilé en bois allongé (11) ou similaire ;
- des accessoires terminaux (12) couplés aux guides centraux (3) et qui incluent un disque de coupe (17) afin de pratiquer des coupes verticales ou inclinées dans les profilés en bois (11) ou similaires ;
- des moyens pour positionner les accessoires intermédiaires (10) et les accessoires terminaux (12) au moyen du chariot principal (4) ; et
- des moyens pour bloquer les accessoires (10 et 12), couplés à ceux-ci.

2. Machine d'assemblage en onglet selon la revendication 1, **caractérisée en ce qu'**elle inclut des moyens pour alimenter et pour enlever automatiquement les pièces ou les profilés en bois (11) qu'il s'agit d'oeuvrer, lesdits moyens étant connectés aux accessoires intermédiaires (10) et aux accessoires terminaux (12).

3. Machine d'assemblage en onglet selon la revendication 1, **caractérisé en ce que** chacun des accessoires terminaux (12) comprend :
- un petit chariot (13) couplé aux guides centraux (3) ;
- un support intermédiaire (15) mobile dans des guides transversaux (18) établis dans le petit chariot (13) ; et
- une tête basculante (16) supportant le disque de coupe (17) et qui est couplée à un arbre d'articulation frontal (18) du support intermédiaire (15), le support intermédiaire ayant une gorge arquée (19) pour guider la tête basculante (16).

4. Machine d'assemblage en onglet selon la revendication 1, **caractérisée en ce que** chacun des accessoires intermédiaires (10) comprend :
- un petit chariot (32) couplé aux guides centraux (3) ;
- une plate-forme supérieure (33) mobile verticalement et établie au-dessus du petit chariot (32), la plate-forme étant connectée à la tige d'un cylindre pneumatique (34) fixé au petit chariot correspondant (32) de l'accessoire intermédiaire (10) ;
- une pièce de butée (36) pour fixer les profilés en bois (11), contre laquelle la plate-forme supérieure (33) vient pousser, et ladite pièce de butée (36) étant connectée à deux supports centraux (37) formés de façon intégrale avec le petit chariot (32) de l'accessoire intermédiaire (10), les plates-formes supérieures (33) comportant des ouvertures centrales (38) pour le passage de ces supports centraux (37) ; et
- des mécanismes de serrage latéraux agencés transversalement par rapport à la position des profilés en bois (11) et dont le rôle est de redresser les profilés précités et d'aligner la gorge des profilés en les mettant en place dans leur position contre les pièces de butée (36), lesdits mécanismes de serrage étant fixés sur les plates-formes supérieures (33), et étant déplacés en montée et en descente de façon intégrale avec les plates-formes.

5. Machine d'assemblage en onglet selon la revendication 1, **caractérisée en ce que** les moyens pour positionner les accessoires (10 et 12) couplés aux guides centraux (3) sont définis par un petit cylindre pneumatique (43) fixé au chariot principal (4), et qui comprend une tige dont le tronçon d'extrémité conique (44) est capable d'être introduit dans un trou complémentaire (45) ménagé dans chacun des petits chariots (13 et 32) des différents accessoires (10 et 12) ; et cela afin de déplacer les accessoires à des positions prédéterminées le long des guides centraux (3) au moyen du mouvement du chariot principal (4).

6. Machine d'assemblage en onglet selon la revendication 1, **caractérisée en ce que** les moyens pour bloquer les accessoires (10 et 12) sont constitués par des sabots de blocage (42).

7. Machine d'assemblage en onglet selon les revendications 1 et 2, **caractérisée en ce que** les moyens pour amener et pour enlever les profilés en bois (11) comprennent :
- des supports basculants (23, 23') couplés aux petits chariots respectifs (13, 32) des accessoires (12, 10) au moyen d'arbres inférieurs (27, 27') ;
- des groupes de rouleaux rotatifs (24, 24') couplés à des arbres supérieurs striés (25, 25') connectés aux supports basculants (23, 23') ;
- des courroies de transmission crantées (26, 26') qui connectent les arbres supérieurs striés (25, 25') et les arbres inférieurs (27, 27') ;
- des cylindres pneumatiques (31, 31') pour positionner les supports basculants (23, 23'), lesdits cylindres étant connectés conjointement aux petits chariots (13, 32), alors que les tiges sont connectées, également conjointement, aux supports basculants eux-mêmes (23, 23') ; et
- des courroies circulaires (29, 29') qui connectent les arbres inférieurs (27, 27') avec un arbre longitudinal (28) établi sous les guides centraux (3), les arbres inférieurs (27, 27') ayant des étranglements semi-circulaires (30, 30') pour coupler les courroies circulaires (29, 29').

8. Machine d'assemblage en onglet selon les revendications 1, 2 et 7, **caractérisée en ce que** les moyens pour amener et enlever les profilés en bois (11) comprennent en outre :
- des rouleaux de contrepression (41, 20) établis au-dessus des groupes de rouleaux rotatifs (24, 24') connectés aux supports basculants (23, 23'), et cela de façon que lesdits profilés en bois (11) sont déplacés et guidés entre les groupes de rouleaux rotatifs (24, 24') et les autres rouleaux de contrepression (20, 41).

9. Machine d'assemblage en onglet selon la revendication 8, **caractérisée en ce que** les rouleaux de contrepression (20) des accessoires terminaux (12) sont couplés à un arbre transversal (21) couplé à des profilés latéraux (22) réalisés de manière intégrale avec le petit chariot respectif (13) qui fait partie de l'accessoire terminal respectif (12).

10. Machine d'assemblage en onglet selon les revendications 4 et 8, **caractérisée en ce que** les rouleaux de contrepression (41) sont agencés sur la surface inférieure des pièces de butée (36) des accessoires intermédiaires (10), lesdits rouleaux de contrepression (41) pouvant être dissimulés.

11. Machine d'assemblage en onglet selon la revendication 4, **caractérisée en ce que** les mécanismes de serrage latéraux comprennent essentiellement des vérins pneumatiques (39) fixés sur les plates-formes supérieures (33).
